# EUROPEAN PATENT APPLICATION

(11) **EP 4 742 014 A1**
(43) Date of publication of application: **13.05.2026**
(21) Application number: 24835422.7
(22) Date of filing: 05.07.2024
(51) Int. Cl.: G06F 3/0481, G06F 9/451

(54) **RECOMMENDATION METHOD AND APPARATUS, STORAGE MEDIUM, AND ELECTRONIC DEVICE**

(30) Priority: 05.07.2023 CN 202310821531
(71) Applicant: Chengdu Guanghexinhao Technology Co., Ltd., Chengdu, Sichuan 610095 (CN)
(72) Inventor: FENG, Lan, Beijing 100028 (CN)
(74) Representative: Grünecker Patent- und Rechtsanwälte PartG mbB
(86) International application number: PCT/CN2024/103744
(87) International publication number: WO 2025/007944

(57) **Abstract**

Embodiments of the present disclosure provide a recommendation method and apparatus, a storage medium, and an electronic device. The method comprises: in response to a first trigger operation inputted by a user, displaying a topic information flow recommendation interface, wherein the topic information flow recommendation interface comprises target topic information and at least some of push objects corresponding to the target topic information, and the target topic information is determined on the basis of historical interaction information of the user; and in response to a second trigger operation for the topic information flow recommendation interface, displaying an object recommendation interface corresponding to the target topic information, wherein the object recommendation interface comprises the push objects corresponding to the target topic information.

## Description

This application claims priority to Chinese Patent Application No. 202310821531.6, filed July 5, 2023, the disclosure of which is hereby incorporated by reference in its entirety as a portion of the present application.

### TECHNICAL FIELD

Embodiments of the present disclosure relate to a recommendation method, a device, a storage medium and an electronic device.

### BACKGROUND

With the continuous development of computer technology and network technology, the ways of displaying information to users have increased, and a large amount of information is displayed to users. The method of displaying information may be: communication connection is established between the server and the client, and the server pushes content to the client to display the push object on the client.

However, the types of push objects displayed on the client are diverse and have poor themes.

### SUMMARY

The present disclosure provides a recommendation method, a device, a storage medium and an electronic device to achieve the subjectivity and accuracy of push objects.

An embodiment of the present disclosure provides a recommendation method, including:
displaying a theme feed recommendation interface in response to a first trigger operation input by a user, where the theme feed recommendation interface includes target theme information and at least portion of push objects corresponding to the target theme information, and the target theme information is determined based on historical interaction information of the user; and
displaying an object recommendation interface corresponding to the target theme information in response to a second trigger operation on the theme feed recommendation interface, where the object recommendation interface includes push objects corresponding to the target theme information.

Embodiments of the present disclosure further provide a recommendation method, including:
a first display module, configured to display a theme feed recommendation interface in response to a first trigger operation input by a user, where the theme feed recommendation interface includes target theme information and at least portion of push objects corresponding to the target theme information, and the target theme information is determined based on historical interaction information of the user; and
a second display module, configured to display an object recommendation interface corresponding to the target theme information in response to a second trigger operation on the theme feed recommendation interface, where the object recommendation interface includes push objects corresponding to the target theme information.

Embodiments of the present disclosure further provide an electronic device, which includes:
one or more processors;
a storage device for storing one or more programs,
when the one or more programs are executed by the one or more processors, the one or more processors implement the recommendation method according to any embodiment of the present disclosure.

Embodiments of the present disclosure further provide a storage medium including computer-executable instructions, which, when executed by a computer processor, are used to perform the recommendation method according to any embodiment of the present disclosure.

### BRIEF DESCRIPTION OF DRAWINGS

The above and other features, advantages and aspects of embodiments of the present disclosure become more apparent with reference to the following detailed description and in combination with the drawings. Throughout the drawings, the same or similar reference signs refer to the same or similar elements. It should be understood that the drawings are schematic and that parts and elements are not necessarily drawn to scale.
Fig. 1 is a schematic diagram of an application scenario provided by an embodiment of the present disclosure;
Fig. 2 is a schematic flowchart of a recommendation method provided by an embodiment of the present disclosure;
Fig. 3 is a schematic diagram of a theme feed recommendation interface provided by an embodiment of the present disclosure;
Fig. 4 is a schematic diagram of a theme feed recommendation interface provided by an embodiment of the present disclosure;
Fig. 5 is a schematic diagram illustrating an object recommendation interface provided by an embodiment of the present disclosure;
Fig. 6 is a schematic structural diagram of a recommendation apparatus provided by an embodiment of the present disclosure; and
Fig. 7 is a schematic structural diagram of an electronic device provided by an embodiment of the present disclosure.

### DETAILED DESCRIPTION

Embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein. Rather, these embodiments are provided for a thorough and complete understanding of the present disclosure. It should be understood that the drawings and embodiments of the present disclosure are only for exemplary purposes and are not intended to limit the protection scope of the present disclosure.

It should be understood that the various steps described in the method embodiments of the present disclosure may be performed in different orders and/or in parallel. Furthermore, the method embodiments may include additional steps and/or omit performing the illustrated steps. The protection scope of the present disclosure is not limited in this aspect.

As used herein, the term "include," "comprise," and variations thereof are open-ended inclusions, i.e., "including but not limited to." The term "based on" is "based, at least in part, on." The term "an embodiment" represents "at least one embodiment," the term "another embodiment" represents "at least one additional embodiment," and the term "some embodiments" represents "at least some embodiments." Relevant definitions of other terms will be given in the description below.

It should be noted that concepts such as the "first," "second," or the like mentioned in the present disclosure are only used to distinguish devices, modules or units, and are not used to limit the interdependence relationship or the order of functions performed by these devices, modules or units.

It should be noted that the modifications of "a," "an," "a plurality of," or the like mentioned in the present disclosure are illustrative rather than restrictive, and those skilled in the art should understand that unless the context clearly indicates otherwise, these modifications should be understood as "one or more."

The names of the messages or information exchanged between a plurality of apparatuses in the embodiments of the present disclosure are for illustrative purposes only and are not intended to limit the scope of these messages or information.

It may be understood that before using the technical solutions disclosed in the embodiments of the present disclosure, it is necessary to inform user(s) the types, using scope, and using scenarios of personal information involved in the present disclosure according to relevant laws and regulations in an appropriate manner and obtain the authorization of the user(s).

For example, in response to receiving a user's active request, a prompt message is sent to the user to clearly remind the user that the requested operation will require acquiring and using the user's personal information. Thus, users can selectively choose whether to provide personal information to the software or hardware such as an electronic device, an application, a server, or a storage medium that perform the operations of the technical solutions of the present disclosure according to the prompt message.

As an optional but non-restrictive implementation, in response to receiving the user's active request, sending the prompt message to the user may be done in the form of a pop-up window, where the prompt message may be presented in text. In addition, the pop-up window may further carry a selection control for users to choose between "agree" or "disagree" to provide the personal information to an electronic device.

It may be understood that the above-mentioned processes of informing and acquiring user authorization are only illustrative and do not limit the embodiments of the present disclosure. Other methods that comply with relevant laws and regulations may also be applied to the embodiments of the present disclosure.

Meanwhile, it may be understood that the data involved in the technical solutions (including but not limited to the data itself, data acquisition or use) should comply with the requirements of corresponding laws, regulations and relevant provisions.

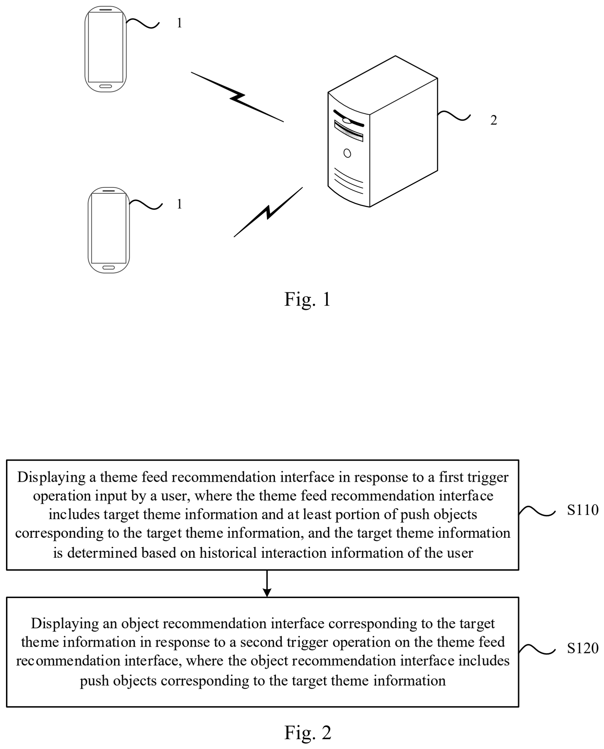

Fig. 1 is a schematic diagram of an application scenario provided by an embodiment of the present disclosure, in which a plurality of clients 1 are communicatively connected to a server 2, and data transmission between the plurality of clients 1 and the server 2 may be realized through a wireless network or other forms. Client 1 may serve as a content provider and upload content to server 2. Server 2 receives the content and stores it. Client 1 may serve as a content presenter, and server 2 pushes content to the client, and the content is displayed on client 1. Client 1 may serve as a content provider or a content presenter under different role selection operations. The client 1 may be an electronic device such as a mobile phone, a PC, a tablet computer, etc.

Fig. 2 is a schematic flowchart of a recommendation method provided by an embodiment of the present disclosure. The embodiment of the present disclosure is suitable for the situation where push objects are thematically displayed on the theme feed recommendation interface of the client. The method may be performed by a recommendation apparatus. The apparatus may be implemented in the form of software and/or hardware, and optionally, implemented as an electronic device, and the electronic device may be a mobile terminal, a PC, etc. As shown in Fig. 2, the method includes:

S110: displaying a theme feed recommendation interface in response to a first trigger operation input by a user, where the theme feed recommendation interface includes target theme information and at least portion of push objects corresponding to the target theme information, and the target theme information is determined based on historical interaction information of the user.

S120: displaying an object recommendation interface corresponding to the target theme information in response to a second trigger operation on the theme feed recommendation interface, where the object recommendation interface includes push objects corresponding to the target theme information.

For example, in response to receiving the first trigger operation input by the user, the client displays a theme feed recommendation interface. The first trigger operation may include a startup operation for an application program, and the application program is used to display the push object. The first trigger operation may also be a selection operation of a preset display label in the theme feed recommendation interface of the client. A plurality of display labels may be displayed at the top position of the theme feed recommendation interface, such as "Follow", "Recommend", "Local", etc., the preset display label used to trigger the display of the target object may be, for example, the "Recommend" label. Specifically, the trigger operation may be a click operation on the "Recommend" label to switch from the interface of other display labels to the theme feed recommendation interface of the "Recommend" label, or, by swiping the display interface, switch from the interface of other display labels to the theme feed recommendation interface of the "Recommend" label, such as a left and right swipe operation, etc. The first trigger operation may also be an update operation on the theme feed recommendation interface. For example, it may be a swipe operation on the theme feed recommendation interface, such as an up and down swipe operation.

The target theme information and at least portion of the push objects of the target theme information are displayed in the theme feed recommendation interface, thereby realizing the thematic display of the target theme information in the theme feed recommendation interface. The target theme information may be theme information that matches the user's historical interaction information. It can be understood that a large number of objects to be pushed may correspond to different theme information respectively. By determining the target theme information that matches the user's historical interaction information, accurate push to users can be achieved. By determining the push objects corresponding to the target theme information, while displaying the target theme information in the theme feed recommendation interface, at least portion of the push objects of the target theme information is displayed to achieve thematic display of the push objects.

Push objects may be, but are not limited to, physical products, service products, virtual resource products, etc., such as restaurants, hotels, movie tickets, etc. There may be a plurality of push objects pushed by the server to the client, and the plurality of push objects are displayed in the theme feed recommendation interface of the client. The plurality of push objects in the theme feed recommendation interface belong to different themes. For example, push object 1 is a restaurant, push object 2 is a hotel, and push object 3 is hairdressing, etc. A plurality of push objects with complex categories are displayed in the same theme feed recommendation interface, which displays poor themes and distributes user attention.

Displaying the push object may be understood as displaying the associated information of the push object, where the associated information includes the entity display information and attribute information of the push object. Entity display information may be images, videos and other information, and attribute information includes but is not limited to transaction volume information, location information, rating information, transaction value, etc. For example, the push object is restaurant A, and the display information includes restaurant A's pictures, store location, sales volume, ratings, prices, etc.

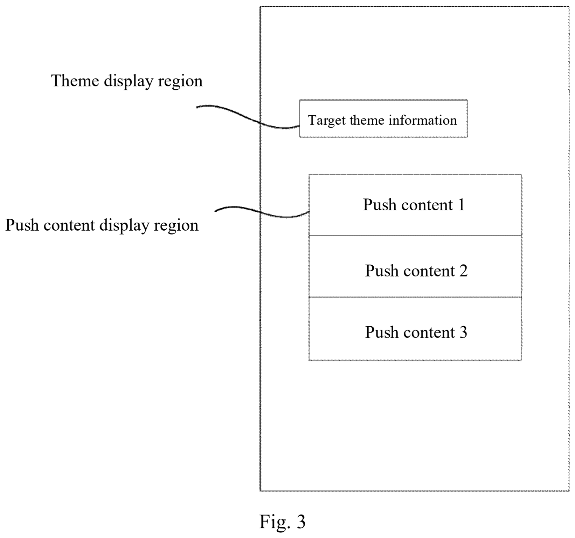

In the theme feed recommendation interface, the target theme information and at least portion of the push objects of the target theme information are displayed. The theme feed recommendation interface includes a theme display region and a push object display region. A theme display region is used for displaying the target theme information. The push object display region includes a plurality of subregions, and each subregion is used to display one push object. For example, refer to Fig. 3, which is a schematic diagram of a theme feed recommendation interface according to an embodiment of the present disclosure. Here, the display position and display method of the information displayed in the subregion are not limited.

In some embodiments, a content display page may be generated based on the target theme information and at least portion of the push objects of the target theme information, and the content display page may be displayed in the theme feed recommendation interface. The content display page may be in the form of a card. The initial content display page is called, which includes a theme display region and a push object display region. The target theme information is added to the theme display region, and the push objects are added to the push object display region to form a content display page.

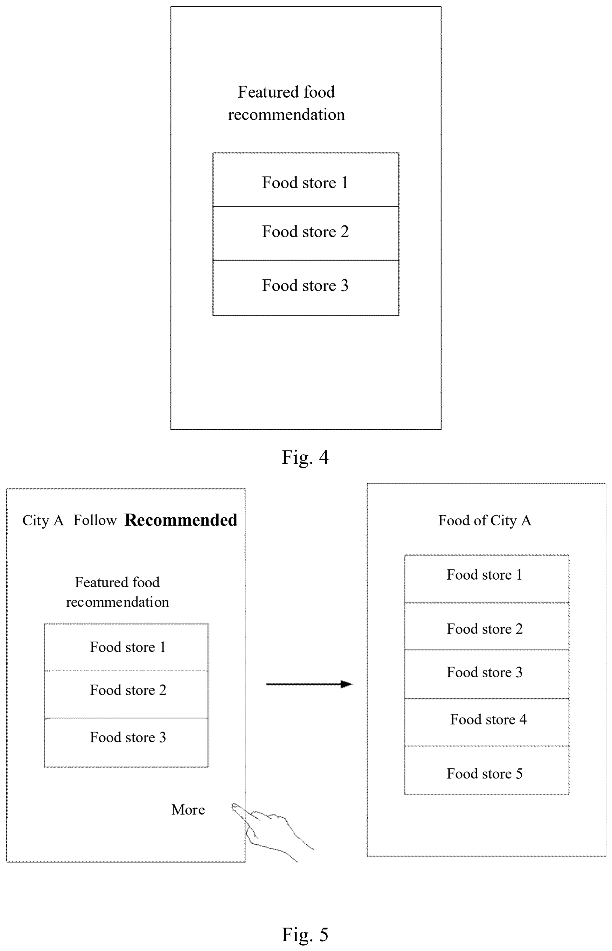

For example, the display method of the target theme information may be generating a concatenated theme based on the target theme information and displaying the concatenated theme in the theme display region. The concatenated theme is concatenated based on the target theme information and a preset identifier. The preset identifier may be one or more of text, character or graphic. For example, the preset identifier may be one or more of "Featured", "Premium", "Recommendation", etc. Correspondingly, the concatenated theme may be featured + target theme information, or target theme information + recommendation, or featured/premium + target theme information + recommendation, etc. For example, the preset identifier may also include graphics such as ☆, and the corresponding concatenated theme may be ☆ ☆ ☆ + target theme information + recommendation. For example, refer to Fig. 4, which is a schematic diagram of a theme feed recommendation interface provided by an embodiment of the present disclosure.

In some embodiments, the information layout of the theme feed recommendation interface (or content display page) may be adjusted according to the number of push objects for displaying and/or a stage of interest of the user in the push objects, so as to flexibly display the push objects in different situations.

The stage of interest of the user in pushed objects include but is not limited to discovery stage, interest generation stage, and transaction stage. In different stages, users pay different attention to a plurality of display information of the push objects. The stage of interest of the user in the push objects may be determined based on the historical behavior information of the user on the push objects. The historical behavior information of the user on the pushed objects includes but is not limited to browsing, entering the details page, collecting, setting likes, liking, placing orders and other operation information. Each interest stage corresponds to different historical behavior information conditions, and the interest stage may be determined based on the status information of the user. For example, in response to the status information including order information for the target object, the interest phase is determined as the transaction stage. In response to the status information including historical behavior information of one or more of collecting, setting likes, and liking, the interest stage is determined as the interest generation stage. In response to the status information being empty or only including historical behavior information such as browsing, the interest stage is determined as the discovery stage.

Users pay different attention to the information displayed in the push objects in different stages of interest. The display information of interest in different interest stages may be highlighted through different information layouts. For example, the display information of interest may be highlighted in a differentiated display manner. The differentiated display manner includes one or more of the following: enlarging the display information being focused on, changing the font, color and other attributes of the display information being focused on, and adjusting the display position of the display information being focused on.

In this embodiment, the content is partially displayed based on the information determined based on the number of push objects and/or the stage of interest of the user in the push objects, which can improve the flexibility of content display and meet different display needs.

In the above embodiment, the push objects displayed in the theme feed recommendation interface are at least portion of all push objects of the server. The number of push objects in the theme feed recommendation interface is a preset number, and the preset number of push objects among all push objects of the server is determined to be displayed in the theme feed recommendation interface. Optionally, a preset number of push objects may be randomly determined among all push objects of the server, or all push objects of the server may be sorted based on preset sorting conditions, and the preset number of push objects may be determined based on the sorting. The sorting conditions include but are not limited to one or more of the scoring data of the push objects, the distance from the user's current location, the positive review rate, the transaction volume, etc.

During the display process of the theme feed recommendation interface, the user's second trigger operation on the theme feed recommendation interface may be received, and the object recommendation interface corresponding to the target theme information may be displayed, and the object recommendation interface includes the push objects corresponding to the target theme information. The second trigger operation may be a trigger operation on a view more control in the theme feed recommendation interface. For example, refer to Fig. 5, which is a schematic diagram of page jump provided by an embodiment of the present disclosure.

By displaying the object recommendation interface, the push objects corresponding to the target theme information are displayed more comprehensively in the object recommendation interface. A plurality of push objects are displayed in the object recommendation interface, and the push objects in the object recommendation interface may be updated through a swipe operation, and the swipe operation may be an up and down swipe operation.

The object recommendation interface includes a channel label of a theme level to which the target theme information belongs. Correspondingly, the push objects displayed in the object recommendation interface match the channel label.

The channel label corresponding to the target theme information in the object recommendation interface is determined, and the channel label corresponding to the target theme information may be determined based on the theme level to which the target theme information belongs. In order to meet different needs for theme information from different users, a plurality of theme levels are set in advance, and different theme levels include different theme information to meet different degrees of theme needs. Optionally, the theme level includes one or more of at least first-level of category, a scene label level, and a platform label level. The first-level of category includes but is not limited to restaurants, hotels, hairdressers, games, etc. Taking restaurants as an example, the second-level of category of restaurants includes but is not limited to party restaurants, atmosphere restaurants, parent-child friendly restaurants, etc. The scene label level is smaller than the second-level of category, and is a subcategory of the second-level of category, and the second-level of category is divided by scene labels. For example, the scene labels of restaurants with atmosphere include but are not limited to couple dating, friend gathering, etc. The platform label level may be an attribute label generated by the platform based on the attributes of the candidate push objects, including high comprehensive score, discounts, close distance, top list, etc.

When the theme level of the target theme information is the first-level of category or the second-level of category, determine the channel label of the first-level of category or the second-level of category as the channel label corresponding to the target theme information. For the target theme information belonging to the scene label level and the platform label level, the scene label level and the platform label level are theme-level traced back to determine the first-level of category to which the target theme information belongs, and the channel label of the first-level of category is determined as the channel label corresponding to the target theme information.

For example, the target theme information in Fig. 5 is food, the corresponding channel label is a food label, and correspondingly, the object recommendation interface is a food object recommendation interface.

In some embodiments, channel labels are displayed at the top of the object recommendation interface. In some embodiments, the object recommendation interface includes a plurality of channel labels of the theme level to which the target theme information belongs. For example, when the theme level of the target theme information is a second-level of category, the second-level of category corresponds to a plurality of channel labels, the plurality of channel labels include channel labels corresponding to the target theme information, and the target channel labels corresponding to the target theme information are displayed differently to facilitate user viewing.

At least portion of the push objects displayed in the theme feed recommendation interface are displayed in a preset position in the object recommendation interface when displayed in the object recommendation interface. For example, some push objects displayed in the theme feed recommendation interface in Fig. 5 are food stores 1, 2, and 3. In the object recommendation interface, food stores 1, 2, and 3 are set on top, that is, food stores 1, 2, and 3 are displayed at the top position of the object recommendation interface.

In some embodiments, the push objects displayed in the object recommendation interface are displayed based on the push objects of the target theme information sent by the server as candidate sets. Displaying the push objects of the same target theme information in the object recommendation interface can improve the thematic display of the object recommendation interface.

Based on the above embodiment, the theme feed recommendation interface includes an operable control. In response to a trigger operation on the operable control, the operation result is displayed. The operable controls include a view more control, a dislike settings control, etc. In response to the triggering operation of the dislike setting control, the theme feed recommendation interface is updated, and the pushed object is tagged with a dislike. The position of the operable control in the theme feed recommendation interface is not limited here. It can be in the bottom region, or in the upper right corner, etc., and can be set according to needs.

The technical solution provided by this embodiment improves the thematic consistency of the push objects displayed in the theme feed recommendation interface by displaying the target theme information and the push objects corresponding to the target theme information in the theme feed display interface. By linking the theme feed recommendation interface and the object recommendation interface, the push objects of the target theme information are displayed in the theme feed recommendation interface and the object recommendation interface in a linked manner, and the comprehensive display and thematic display of the push objects corresponding to the target theme information are achieved through the object recommendation interface.

Based on the above embodiments, the target theme information displayed in the theme feed display interface is determined based on the historical interaction information of the user, thereby improving the accuracy of the content displayed in the theme feed display interface. The process of determining the target theme information may be performed by the server. Specifically, the client may obtain the historical interaction information of the user and send the historical interaction information of the user to the server, and the server determines the target theme information and the push objects corresponding to the target theme information based on the historical interaction information of the user, and pushes the push objects corresponding to the target theme information and the target theme information to the client, thereby improving the push accuracy of the target theme information and the push objects.

The historical interaction information may be obtained by pre-storing the historical interaction information of at least one user in the client, and reading the historical interaction information corresponding to the login account of the client. Alternatively, the current user information is determined by identifying characteristics such as the user's fingerprint to read the historical interaction information corresponding to the current user information. By sending historical interaction information to the server, the server pushes target theme information and its push objects that match the historical interaction information to the client.

Historical interaction information is interaction information between users and historical push objects, including but not limited to click behavior information on historical push objects, order placement behavior information on historical push objects, feedback behavior information on historical push objects, etc. The feedback behavior information includes but is not limited to behavior information such as setting likes, setting dislikes, following, canceling attention, commenting on, etc. Optionally, the historical interaction information may include interaction information within a preset time period before the current moment.

In this embodiment, the server determines a push object suitable for historical interaction information from a large number of candidate push objects. The server pushes a plurality of push objects to the client, and the plurality of push objects are displayed in the theme feed recommendation interface of the client. The plurality of push objects in the theme feed recommendation interface belong to different themes, for example, push object 1 is a restaurant, push object 2 is a hotel, and push object 3 is hairdressing, etc. A plurality of push objects with complex categories are displayed in the same theme feed recommendation interface, which displays poor themes and distributes user attention.

By dividing a large number of candidate push objects into themes, each theme information includes a plurality of candidate push objects. When the target theme information that matches the historical interaction information is determined, the push objects may be determined among the candidate push objects corresponding to the target theme information, so as to display push objects under the same target theme information in the theme feed recommendation interface of the client, improving the theme relevance of content display and facilitating users to compare and select push objects of the same theme.

In some embodiments, the target theme information may be determined by: obtaining a plurality of candidate theme information; processing the historical interaction information based on a theme matching model to obtain the target theme information matching the historical interaction information. The theme matching model may be a neural network model, and a model with a theme matching function is trained through sample data obtained during the display process of historical push objects of the users. The sample data includes historical interaction information and theme information of push objects. By inputting the historical interaction information into the theme matching model, the output result of the theme matching model is obtained. The output result may be the confidence of the theme information, and the target theme information that matches the historical interaction information is determined through the confidence. For example, the theme information with the greatest confidence may be determined as the target theme information. It can be understood that the above-mentioned a plurality of candidate theme information is a collection of candidate theme information of a plurality of theme levels. For example, the plurality of candidate theme information includes restaurants, hotels, hairdressers, parents and children restaurants, party restaurants, convenience hotels, youth hotels etc.

In some embodiments, the target theme information may be determined by: obtaining a plurality of candidate theme information; obtaining the historical interaction information of the user, and determining the theme interaction information during the display process of the historical push object of each candidate theme information in the historical interaction information; determining the target theme information based on an interaction type and/or interaction frequency of theme interaction information corresponding to each candidate theme information.

Historical interaction information is the user's interaction information on historical push objects, including the interaction object, interaction type, interaction timestamp, etc. of each interaction information. The interaction type may be placing an order, clicking to browse, setting likes, reviews, etc., and the interaction object is historical push objects. The historical interactive information is divided by the candidate theme information corresponding to the historical push objects, and the collection of the interactive information of the plurality of historical push objects corresponding to the candidate theme information is determined as the theme interactive information of the candidate theme information. The user's degree of interest in the candidate theme information can be determined through the interaction type and/or interaction frequency in the theme interaction information of the candidate theme information, and the candidate theme information with the greatest degree of interest may be determined as the target theme information.

Optionally, the user's degree of interest in the candidate theme information may be represented by the interaction frequency in the theme interaction information of the candidate theme information, and the degree of interest is positively related to the interaction frequency, and the interaction frequency may be the sum of the number of interaction information in the theme interaction information. Optionally, the user's degree of interest in the candidate theme information may be represented by the interaction type in the theme interaction information of the candidate theme information. For example, the degree of interest corresponding to the interaction types of placing an order, setting a like, and clicking to browse decrease in sequence. Optionally, the user's degree of interest in the candidate theme information may be characterized by the interaction frequency of a specific interaction type in the theme interaction information of the candidate theme information. The degree of interest is positively correlated with the interaction frequency of a specific interaction type. The specific interaction type may be placing orders, etc., which may be set according to needs. Optionally, the interaction frequency of each interaction type in the theme interaction information of the candidate theme information is determined. Based on the weight of each interaction type, the interaction frequency of each interaction type is weighted, and the degree of interest is represented by the weighted value. The degree of interest is positively correlated with the weighted values.

The target theme information is determined among a plurality of candidate theme information in the above manner, and each candidate theme information corresponds to a candidate set of push objects respectively. When the target theme information is determined, the push object may be determined in the candidate set of push objects of the target theme information.

The method of determining the push object corresponding to the target theme information includes: determining a theme level to which the target theme information belongs, the theme level comprising the plurality of candidate theme information; performing clustering processing on candidate push objects based on the plurality of candidate theme information to obtain candidate push objects corresponding to each candidate theme information; extracting candidate push objects of the target theme information as the push objects corresponding to the target theme information.

The theme level to which the target theme information belongs is determined based on the correspondence between the preset theme levels and the candidate theme information. A plurality of candidate theme information included in the theme levels is extracted, and the candidate push objects are clustered through the plurality of candidate theme information included in the theme level to obtain the push objects corresponding to the target theme information.

In some embodiments, the candidate push objects are clustered through a preset clustering algorithm to obtain a plurality of clusters, and each cluster includes a plurality of candidate push objects. Specifically, it may be by clustering the associated text of the candidate push object, where the associated text may be one or more of the description text and feedback text (such as evaluation information) of the candidate push object.

The high-frequency keywords in each cluster are extracted, the high-frequency keywords of the cluster are matched with the preset keywords of the candidate theme information, and the corresponding relationship between the clusters and the candidate theme information is determined. When a keyword of the candidate theme information match a keyword of a cluster, the candidate push objects in the cluster is determined as the candidate push object corresponding to the candidate theme information.

In some embodiments, performing clustering processing on candidate push objects based on the plurality of candidate theme information to obtain candidate push objects corresponding to each candidate theme information includes: extracting keywords from associated text of the candidate push objects, and performing clustering processing based on the keywords of the candidate push objects and preset keywords of the plurality of candidate theme information to obtain the candidate push objects corresponding to each candidate theme information.

Optionally, for any candidate push object, the keyword in the associated text of the candidate push object is extracted, and the keyword of the candidate push object is matched with the preset keywords of the candidate theme information. In response to the keyword being matched successfully, it is determined that the candidate push object matches the candidate theme information, and the candidate push object is added to the candidate set of candidate theme information. For example, the preset keywords of a parent-child friendly restaurant include but are not limited to having baby chairs, being suitable for taking children, etc., and the preset keywords of an atmosphere restaurant include but are not limited to high beauty, being suitable for taking photos, etc.

Optionally, the keywords of the candidate push object may be converted into a first feature vector, the preset keywords of the candidate theme information may be converted into a second feature vector, and the clustering processing may be performed based on the similarity between the first feature vector and the second feature vector. When the similarity between the first feature vector and the second feature vector is greater than the similarity threshold, it is determined that the candidate push object matches the candidate theme information, and the candidate push object is added to the candidate set of candidate theme information. Alternatively, clustering processing may also be performed based on the distance between the first feature vector and the second feature vector. When the distance between the first feature vector and the second feature vector is less than the distance threshold, it is determined that the candidate push object matches the candidate theme information, and the candidate push object is added to the candidate set of theme information.

After dividing a large number of candidate push objects based on the candidate theme information, the candidate push objects under the target theme information are extracted as push objects, and the target theme information and the push objects of the target theme information are pushed to the client, so that the client can display the push objects thematically.

The technical solution of the embodiments of the present disclosure obtains historical interaction information and determines the theme level and target theme information that match the historical interaction information, so as to push the push objects that match the historical interaction information to the client, thereby improving the push accuracy of the push objects. By pushing content based on the determined theme level and target theme information, a plurality of determined push objects belong to the same target theme information, thereby improving the theme consistency of the push objects displayed by the client.

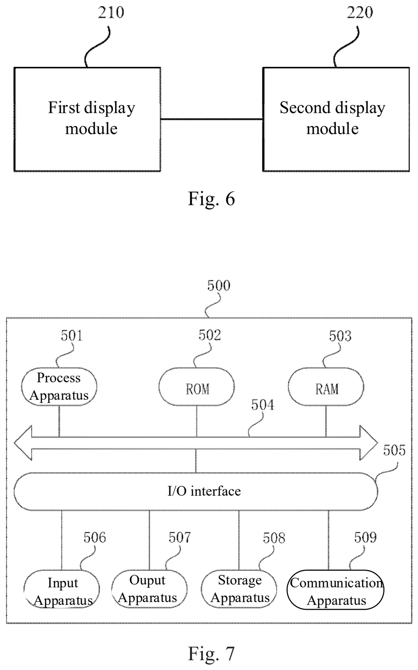

Fig. 6 is a schematic structural diagram of a recommendation apparatus provided by an embodiment of the present disclosure. As shown in Fig. 6, the apparatus includes: a first display module 210 and a second display module 220.

The first display module 210 is configured to display a theme feed recommendation interface in response to a first trigger operation input by a user, where the theme feed recommendation interface includes target theme information and at least portion of push objects corresponding to the target theme information, and the target theme information is determined based on historical interaction information of the user;

The second display module 220 is configured to display an object recommendation interface corresponding to the target theme information in response to a second trigger operation on the theme feed recommendation interface, where the object recommendation interface includes push objects corresponding to the target theme information.

The technical solution provided by the embodiments of the present disclosure improves the subjectivity of the push objects displayed in the theme feed recommendation interface by displaying the target theme information and the push objects corresponding to the target theme information in the theme feed display interface. By linking the theme feed recommendation interface and the object recommendation interface, the push objects of the target theme information are displayed in the theme feed recommendation interface and the object recommendation interface in a linked manner, and the comprehensive display and thematic display of the push objects corresponding to the target theme information are achieved through the object recommendation interface.

Based on the above embodiments, optionally, the theme feed recommendation interface includes a theme display region and a push object display region; the theme display region is used to display the target theme information, the push object display region includes a plurality of subregions, and each of the plurality of subregions is used to display one push object.

Optionally, the object recommendation interface includes a channel label of a theme level, the target theme information belongs to the theme level, and the push objects displayed in the object recommendation interface matches the channel label.

Optionally, in the object recommendation interface, the at least portion of the push objects displayed on the theme feed recommendation interface is displayed at a top position of the object recommendation interface.

Based on the above embodiments, optionally, the apparatus further includes a target theme information determination module for: obtaining a plurality of candidate theme information; obtaining the historical interaction information of the user, and determining theme interaction information during a display process of a historical push object of each candidate theme information in the historical interaction information; determining the target theme information based on an interaction type and/or interaction frequency of theme interaction information corresponding to each candidate theme information.

Optionally, the apparatus further includes a push object determination module for:
determining a theme level to which the target theme information belongs, the theme level including the plurality of candidate theme information; performing clustering processing on candidate push objects based on the plurality of candidate theme information to obtain candidate push objects corresponding to each candidate theme information; extracting candidate push objects of the target theme information as the push objects corresponding to the target theme information.

Based on the above embodiments, optionally, the theme level includes one or more of at least first-level of category, a scene label level and a platform label level.

The recommendation apparatus provided by the embodiments of the present disclosure can execute the recommendation method provided by any embodiment of the present disclosure, and has corresponding functional modules for executing method and beneficial effects.

It is worth noting that each unit and module included in the above apparatus are only divided according to functional logic, but are not limited to the above division, as long as the corresponding function can be implemented. In addition, the specific names of each functional unit are only for the convenience of distinguishing each other, and are not used to limit the scope of protection of the embodiments of the present disclosure.

Fig. 7 is a schematic structural diagram of an electronic device provided by an embodiment of the present disclosure. Referring to Fig. 7, Fig. 7 illustrates a schematic structural diagram of an electronic device 500 (such as the terminal device or server in Fig. 7) suitable for implementing the embodiments of the present disclosure. The electronic terminal in the embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device illustrated in Fig. 7 is merely an example, and should not pose any limitation to the functions and the range of use of the embodiments of the present disclosure.

As shown in Fig. 7, the electronic device 500 may include a processing apparatus 501 (e.g., a central processing unit, a graphics processing unit, etc.), which can perform various suitable actions and processing according to a program stored in a read-only memory (ROM) 502 or a program loaded from a storage apparatus 508 into a random-access memory (RAM) 503. The RAM 503 further stores various programs and data required for operations of the electronic device 500. The processing apparatus 501, the ROM 502, and the RAM 503 are interconnected through a bus 504. An input/output (I/O) interface 505 is also connected to the bus 504.

Usually, the following apparatuses may be connected to the I/O interface 505: an input apparatus 506 including, for example, a touch screen, a touch pad, a keyboard, a mouse, a camera, a microphone, an accelerometer, a gyroscope, or the like; an output apparatus 507 including, for example, a liquid crystal display (LCD), a loudspeaker, a vibrator, or the like; a storage apparatus 508 including, for example, a magnetic tape, a hard disk, or the like; and a communication apparatus 509. The communication apparatus 509 may allow the electronic device 500 to be in wireless or wired communication with other devices to exchange data. While Fig. 7 illustrates the electronic device 500 having various apparatuses, it should be understood that not all of the illustrated apparatuses are necessarily implemented or included. More or fewer apparatuses may be implemented or included alternatively.

Particularly, according to the embodiments of the present disclosure, the processes described above with reference to the flowcharts may be implemented as a computer software program. For example, the embodiments of the present disclosure include a computer program product, which includes a computer program carried by a non-transitory computer-readable medium. The computer program includes program code for performing the methods shown in the flowcharts. In such embodiments, the computer program may be downloaded online through the communication apparatus 509 and installed, or may be installed from the storage apparatus 508, or may be installed from the ROM 502. When the computer program is executed by the processing apparatus 501, the above-mentioned functions defined in the methods of some embodiments of the present disclosure are performed.

The names of the messages or information exchanged between a plurality of apparatuses in the embodiments of the present disclosure are for illustrative purposes only and are not intended to limit the scope of these messages or information.

The electronic device provided by the embodiments of the present disclosure and the recommendation method provided by the above embodiments belong to the same inventive concept, and technical details not exhaustively described in the present embodiment may be referred to the above embodiments, and the present embodiment has the same beneficial effects as the above embodiments.

Embodiments of the present disclosure provide a computer storage medium on which a computer program is stored. When the program is executed by a processor, the recommendation method provided in the above embodiments is implemented.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program code. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementations, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to display a theme feed recommendation interface in response to a first trigger operation input by a user, where the theme feed recommendation interface comprises target theme information and at least portion of push objects corresponding to the target theme information, and the target theme information is determined based on historical interaction information of the user; display an object recommendation interface corresponding to the target theme information in response to a second trigger operation on the theme feed recommendation interface, where the object recommendation interface comprises push objects corresponding to the target theme information.

The computer program code for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, function, and operation of possible implementations of systems, methods, and computer program products according to various embodiments of the present disclosure. In this regard, each block in the flowcharts or block diagrams may represent a module, a program segment, or a portion of code, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of unit does not constitute a limitation of the unit itself under certain circumstances. For example, the first acquisition unit can also be described as "a unit that acquires at least two Internet Protocol addresses."

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, Example 1 provides a recommendation method, including:
displaying a theme feed recommendation interface in response to a first trigger operation input by a user, where the theme feed recommendation interface includes target theme information and at least portion of push objects corresponding to the target theme information, and the target theme information is determined based on historical interaction information of the user; and
displaying an object recommendation interface corresponding to the target theme information in response to a second trigger operation on the theme feed recommendation interface, where the object recommendation interface includes push objects corresponding to the target theme information.

According to one or more embodiments of the present disclosure, Example 2 provides the recommendation method of Example 1, where:
the theme feed recommendation interface includes a theme display region and a push object display region;
the theme display region is used to display the target theme information, the push object display region includes a plurality of subregions, and each of the plurality of subregions is used to display one push object.

According to one or more embodiments of the present disclosure, Example 3 provides the recommendation method of Example 1, where:
the object recommendation interface includes a channel label of a theme level, the target theme information belongs to the theme level, and the push objects displayed in the object recommendation interface matches the channel label.

According to one or more embodiments of the present disclosure, Example 4 provides the recommendation method of Example 1, where:
in the object recommendation interface, the at least portion of the push objects displayed on the theme feed recommendation interface is displayed at a top position of the object recommendation interface.

According to one or more embodiments of the present disclosure, Example 5 provides the recommendation method of Example 1, where:
a manner of determining the target theme information includes: obtaining a plurality of candidate theme information; obtaining the historical interaction information of the user, and determining theme interaction information during a display process of a historical push object of each candidate theme information in the historical interaction information; determining the target theme information based on an interaction type and/or interaction frequency of theme interaction information corresponding to each candidate theme information.

According to one or more embodiments of the present disclosure, Example 6 provides the recommendation method of Example 1, where:
a manner of determining the push objects corresponding to the target theme information includes: determining a theme level to which the target theme information belongs, the theme level including the plurality of candidate theme information; performing clustering processing on candidate push objects based on the plurality of candidate theme information to obtain candidate push objects corresponding to each candidate theme information; extracting candidate push objects of the target theme information as the push objects corresponding to the target theme information.

According to one or more embodiments of the present disclosure, Example 7 provides the recommendation method of Example 1, where:
the theme level includes one or more of at least first-level of category, a scene label level and a platform label level.

According to one or more embodiments of the present disclosure, Example 8 provides a recommendation apparatus, including:
a first display module, configured to display a theme feed recommendation interface in response to a first trigger operation input by a user, where the theme feed recommendation interface includes target theme information and at least portion of push objects corresponding to the target theme information, and the target theme information is determined based on historical interaction information of the user; and
a second display module, configured to display an object recommendation interface corresponding to the target theme information in response to a second trigger operation on the theme feed recommendation interface, where the object recommendation interface includes push objects corresponding to the target theme information.

The above descriptions are merely preferred embodiments of the present disclosure and illustrations of the technical principles employed. Those skilled in the art should understand that the scope of disclosure involved in the present disclosure is not limited to the technical solutions formed by the specific combination of the above-mentioned technical features, and should also cover, without departing from the above-mentioned disclosed concept, other technical solutions formed by any combination of the above-mentioned technical features or their equivalents, such as technical solutions which are formed by replacing the above-mentioned technical features with the technical features disclosed in the present disclosure (but not limited to) with similar functions.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combinations.

Although the subject matter has been described in language specific to structural features and/or method logical actions, it should be understood that the subject matter defined in the appended claims is not necessarily limited to the specific features or actions described above. Rather, the specific features and actions described above are merely example forms of implementing the claims.

## Claims

1. A recommendation method, comprising:
displaying a theme feed recommendation interface in response to a first trigger operation input by a user, wherein the theme feed recommendation interface comprises target theme information and at least portion of push objects corresponding to the target theme information, and the target theme information is determined based on historical interaction information of the user; and
displaying an object recommendation interface corresponding to the target theme information in response to a second trigger operation on the theme feed recommendation interface, wherein the object recommendation interface comprises push objects corresponding to the target theme information.

2. The method according to claim 1, wherein the theme feed recommendation interface comprises a theme display region and a push object display region;
the theme display region is used to display the target theme information, the push object display region comprises a plurality of subregions, and each of the plurality of subregions is used to display one push object.

3. The method according to claim 2, wherein a manner of displaying the target theme information comprises:
generating a concatenated theme based on the target theme information, and displaying the concatenated theme in the theme display region.

4. The method according to claim 3, wherein the concatenated theme is concatenated based on the target theme information and a preset identifier, wherein the preset identifier is one or more of text, character or graphic.

5. The method according to claim 1, wherein the object recommendation interface comprises a channel label of a theme level, the target theme information belongs to the theme level, and the push objects displayed in the object recommendation interface matches the channel label.

6. The method according to claim 1, wherein in the object recommendation interface, the at least portion of the push objects displayed on the theme feed recommendation interface is displayed at a top position of the object recommendation interface.

7. The method according to any one of claims 1-6, wherein a manner of determining the target theme information comprises:
obtaining a plurality of candidate theme information;
obtaining the historical interaction information of the user, and determining theme interaction information during a display process of a historical push object of each candidate theme information in the historical interaction information;
determining the target theme information based on an interaction type and/or interaction frequency of theme interaction information corresponding to each candidate theme information.

8. The method according to any one of claims 1-6, wherein a manner of determining the target theme information comprises:
obtaining a plurality of candidate theme information;
obtaining the historical interaction information of the user;
processing the historical interaction information based on a theme matching model to obtain the target theme information matching the historical interaction information.

9. The method according to claim 7 or 8, wherein a manner of determining the push objects corresponding to the target theme information comprises:
determining a theme level to which the target theme information belongs, the theme level comprising the plurality of candidate theme information;
performing clustering processing on candidate push objects based on the plurality of candidate theme information to obtain candidate push objects corresponding to each candidate theme information;
extracting candidate push objects of the target theme information as the push objects corresponding to the target theme information.

10. The method according to claim 9, wherein the performing clustering processing on candidate push objects based on the plurality of candidate theme information to obtain candidate push objects corresponding to each candidate theme information comprises:
extracting keywords from associated text of the candidate push objects, and performing clustering processing based on the keywords of the candidate push objects and preset keywords of the plurality of candidate theme information to obtain the candidate push objects corresponding to each candidate theme information.

11. The method according to claim 9, wherein the theme level comprises one or more of at least first-level of category, a scene label level and a platform label level.

12. The method according to claim 1, further comprising:
adjusting an information layout of the theme feed recommendation interface according to a number of push objects for displaying and/or a stage of interest of the user in the push objects,
wherein the stage of interest is determined based on historical behavior information of the user on the push objects.

13. A recommendation apparatus, comprising:
a first display module, configured to display a theme feed recommendation interface in response to a first trigger operation input by a user, wherein the theme feed recommendation interface comprises target theme information and at least portion of push objects corresponding to the target theme information, and the target theme information is determined based on historical interaction information of the user; and
a second display module, configured to display an object recommendation interface corresponding to the target theme information in response to a second trigger operation on the theme feed recommendation interface, wherein the object recommendation interface comprises push objects corresponding to the target theme information.

14. An electronic device, comprising:
one or more processors;
a storage device for storing one or more programs,
when the one or more programs are executed by the one or more processors, the one or more processors implement the recommendation method according to any one of claims 1-12.

15. A storage medium comprising computer-executable instructions, wherein the computer-executable instructions, when executed by a computer processor, are used to perform the recommendation method according to any one of claims 1-12.
